# FASCICULE DE BREVET EUROPEEN

(11) **EP 4 166 818 B1**
(45) Date de publication et mention de la délivrance du brevet: **04.09.2024**
(21) Numéro de dépôt: 22199507.9
(22) Date de dépôt: 04.10.2022
(51) Int. Cl.: F16H 57/04, F16H 57/028, F16H 57/02

(54) **SYSTÈME DE PROPULSION DE VÉHICULE ÉLECTRIQUE OU HYBRIDE**
ANTRIEBSSYSTEM FÜR EIN ELEKTRISCHES ODER HYBRIDFAHRZEUG
PROPULSION SYSTEM FOR AN ELECTRIC OR HYBRID VEHICLE

(30) Priorité: 14.10.2021 FR 2110874
(43) Date de publication de la demande: 19.04.2023
(73) Titulaire: VALEO EMBRAYAGES, 80009 Amiens (FR)
(72) Inventeur: VERHOOG, Roël, 80009 AMIENS (FR); MAUREL, Pascal, 80000 Amiens (FR); FOUCART, Gregory, 80000 Amiens (FR)
(74) Mandataire: Valeo Powertrain Systems

(56) Documents cités:
- EP-A1- 3 892 892
- WO-A1-2020/182432
- DE-A1- 102019 207 257

## Description

La présente invention concerne un système de propulsion de véhicule électrique ou hybride.

De façon connue, un tel système de propulsion comprend une machine électrique tournante comprenant un enroulement électrique de stator, une électronique de commande de la machine électrique tournante, et un réducteur transmettant le couple en sortie de la machine électrique tournante vers des roues externes du véhicule en contact avec le sol. Le réducteur comprend un boîtier à l'intérieur duquel sont disposées des roues dentées coopérant entre elles par engrènement pour transmettre le couple, ce boîtier recevant du liquide venant au contact des roues du réducteur. EP 3 892 892 divulgue un tel système de propulsion.

Pour éviter un coincement des roues du réducteur qui engrènent entre elles, il est nécessaire de prévoir des tolérances dans le dimensionnement des roues et des arbres qui les portent. Ces tolérances doivent également prendre en compte les dilatations éventuelles dans le réducteur, ces dilatations étant causées par les variations de température importantes pouvant exister dans le réducteur, et ces dilations pouvant différer en cas de matériau différent.

A titre d'exemple dans le cas où un couple maximal doit être transmis par le réducteur à une température extérieure de -40°C, la température du boîtier du réducteur peut avoir une valeur de -25°C, tandis que les roues de ce réducteur, échauffées par le couple transmis, ont une température de 75°C, et que le liquide dans le réducteur, échauffé par les roues du réducteur, a une température de 10°C. Il y a alors une différence de température de l'ordre de 100°C au sein du réducteur, qui peut conduire à des dilatations importantes des roues mais également du boîtier du réducteur par lequel la liaison physique entre les roues peut se faire. Cette prise en compte des dilatations conduit à augmenter encore les tolérances dans le dimensionnement des pièces du réducteur. Or, ces tolérances conduisent à l'existence d'un jeu entre les dents des roues engrenant entre elles, d'où une perte de rendement et une usure, et à l'apparition de bruit lors du contact entre les dents des roues engrenant entre elles.

Il existe un besoin pour bénéficier d'un réducteur avec des dents ne se coinçant pas, quelles que soient les conditions de température, tout en réduisant les jeux et bruits entre les roues du réducteur engrenant entre elles.

L'invention vise à répondre à ce besoin et elle y parvient, selon l'un de ses aspects, à l'aide d'un système de propulsion selon la revendication 1.

Ainsi, plutôt que d'augmenter les tolérances entre les dents des roues de manière à éviter tout coincement, y compris dans des configurations extrêmes tel qu'un couple maximal transmis au sein du réducteur à -40°C, l'invention consiste à surveiller un écart de température dans le réducteur et à adapter la commande du système de propulsion en fonction de la valeur de cet écart de température.

La valeur seuil est par exemple une valeur prédéfinie qui reste fixe. Cette valeur prédéfinie est par exemple comprise entre 10°C et 20°C.

En variante, la valeur seuil peut être variable, prenant par exemple une valeur au sein de plusieurs valeurs discrètes prédéfinies. Par exemple lorsque la température ambiante dépasse une certaine valeur, une première valeur seuil est utilisée, et lorsque la température ambiante est inférieure à ladite valeur, une deuxième valeur seuil est utilisée. La première valeur seuil peut être supérieure à la deuxième valeur seuil, par exemple le double. Le changement de valeur seuil se fait par exemple à la température à laquelle le réducteur a été assemblé, cette valeur donnée pouvant alors être comprise entre 15°C et 20°C. En variante, cette variation de valeur seuil n' est pas fonction de la température ambiante mais de la valeur de couple transmis par le réducteur, de la valeur de jeu estimée entre les dents engrenant entre elles, ou encore de l'usure du réducteur, par exemple.

Au sens de la présente demande, un véhicule désigne toute forme de mobilité à propulsion électrique ou hybride. « Véhicule » englobe ainsi un engin roulant sur terre via quatre, trois, deux roues ou tout autre nombre de roues, ou un engin se déplaçant dans les airs ou sur l'eau, voire dans l'espace. Un exemple de véhicule est une automobile.

Le liquide est par exemple de l'huile. Les roues du réducteur peuvent baigner dans ce liquide ou barboter dans ce liquide.

On adapte par exemple la commande du système de propulsion pour faire augmenter la température du liquide et celle du boîtier du réducteur, la chaleur s'échangeant entre ces derniers par convection.

Le réducteur comprend par exemple des résistances chauffantes, et le dispositif de commande est alors configuré pour commander l'activation de ces résistances chauffantes de manière à chauffer le liquide pour réduire la différence de température. Ces résistances chauffantes sont par exemple disposées à l'intérieur du boîtier, dans une zone apte à être occupée par le liquide, temporairement ou en permanence.

En variante, ou en complément, toujours lorsque l'on cherche à augmenter la température du liquide et celle du boîtier du réducteur, notamment lorsque ce liquide circule également dans la machine électrique pour refroidir celle-ci, et lorsque l'enroulement électrique de stator est polyphasé, l'adaptation de la commande peut être effectuée comme suit. Le dispositif de commande peut être configuré pour commander l'alimentation de certaines phases seulement de cet enroulement électrique de stator de manière à chauffer le liquide pour réduire la différence de température. Cette alimentation de certaines phases seulement ne fait pas tourner le rotor de la machine électrique mais permet, par effet Joule dans l'enroulement électrique de stator, de chauffer le liquide. Lorsque le liquide refroidissant la machine électrique n'est pas le même que celui contenu dans le réducteur, l'échauffement dans la machine électrique peut être transmis au carter de cette machine électrique puis au boîtier du réducteur par convection et conduction.

En variante, ou en complément de ce qui précède, toujours dans le cas où l'enroulement électrique de stator est polyphasé, le dispositif de commande peut être configuré pour appliquer une tension moyenne continue entre les phases de l'enroulement électrique de stator, de manière à chauffer le liquide pour réduire la différence de température. L'application de cette tension moyenne continue permet, par effet Joule dans l'enroulement électrique de stator, d'obtenir les mêmes effets que ce qui vient d'être décrit.

Cette adaptation de la commande pour faire augmenter la température du liquide et celle du boîtier du réducteur peut être conditionnée au fait que la température à l'extérieur du système de propulsion, ou du véhicule, soit inférieure à une valeur donnée alors qu'un signal de réveil est reçu par le dispositif de commande. Un tel signal de réveil est par exemple l'une de la détection d'un déverrouillage du véhicule, de la détection de l'ouverture d'une porte du véhicule, de la détection de l' appui sur un bouton de démarrage du véhicule, ou de la réception d'un signal de commande depuis une télécommande.

Cette adaptation de la commande pour faire augmenter la température du liquide et celle du boîtier du réducteur peut s'interrompre lorsque la température du liquide dans le réducteur atteint une valeur donnée et/ou lorsqu'une durée donnée est dépassée.

En variante ou en complément de tout ce qui précède, on peut selon l'invention adapter la commande du système de propulsion pour diminuer la température des roues du réducteur. On modifie par exemple l'alimentation de l'enroulement électrique de stator de manière à réduire la consigne de couple pour la machine électrique, pour réduire la différence de température.

Du fait de cette réduction de la consigne de couple pour la machine électrique, le couple transmis par engrènement par les roues est plus faible, de sorte que la température des roues diminue. La différence entre la température des roues et la température du boîtier ou entre la température des roues et la température du liquide est ainsi réduite.

Dans tout ce qui précède, la valeur seuil peut être comparée à la différence entre la température des roues du réducteur et la température du boîtier du réducteur.

En variante, dans tout ce qui précède, la valeur seuil peut être comparée à la différence entre la température des roues du réducteur et la température du liquide contenu dans le réducteur. En variante encore, la valeur seuil peut être comparée à la différence entre la température du liquide contenu dans le réducteur et la température du boîtier du réducteur.

Dans tout ce qui précède, l'une au moins de la température du boîtier, de la température du liquide, et de la température des roues du réducteur peut être obtenue à l'aide d'un estimateur. Le cas échéant, la température du liquide dans le réducteur est obtenue à l'aide d'un estimateur mettant en oeuvre une cartographie reliant cette température et : la puissance mécanique en entrée du réducteur et/ou la température à l'extérieur du système. La puissance mécanique en entrée du réducteur est par exemple obtenue à l'aide de la puissance électrique de la machine électrique déterminée à l'aide de la valeur du courant de phase et à l'aide du rendement de la machine électrique. Une fois l'estimation de la température du liquide obtenue, on déduit la température des roues et/ou la température du boîtier. L'estimation de la température du liquide peut également être obtenue par des équations dynamiques. En variante, chacune de la température du boîtier et de la température des roues du réducteur est par exemple obtenue via un estimateur respectif ou via un estimateur commun. Chaque estimateur met par exemple en oeuvre une cartographie reliant la puissance mécanique en entrée du réducteur et/ou la température à l'extérieur du système de propulsion avec la température considérée, ou chaque estimateur peut mettre en oeuvre des équations dynamiques.

En variante, l'une au moins de la température du boîtier, de la température du liquide, et de la température des roues du réducteur peut être obtenue à l'aide d'un capteur. Un capteur de température est par exemple disposé sur chaque arbre du réducteur et sa température est considérée comme étant celle de la ou des roues qu'il porte. Dans ce cas, la température des roues considérée pour l'écart de température ci-dessus peut être la moyenne de ces différentes valeurs fournies par les capteurs des arbres. Un capteur de température peut être monté sur la paroi intérieure du boîtier.

Le capteur de température peut être une ou plusieurs sondes de température, de type CTN ou CPN. En variante ou en complément, il peut s'agir d'un ou plusieurs thermocouples.

Dans tout ce qui précède, le dispositif de commande est par exemple intégré à l'unité de contrôle de la transmission du véhicule (« TCU » en anglais) ou à l'unité de contrôle moteur (« ECU » en anglais) ou à une autre unité de contrôle distincte. Le dispositif de commande met par exemple en oeuvre un ou plusieurs dispositifs de traitement numérique, comme des microcontrôleurs. Le dispositif de commande est par exemple un circuit intégré de type ASIC (« Application-specific integrated circuit » en anglais). Le dispositif de commande fournit par exemple des instructions à une unité de pilotage (« driver » en anglais) de l'électronique de commande.

La machine électrique peut présenter une puissance électrique nominale supérieure ou égale à 5 kW, à 15 kW, à 25 kW, à 50 kW, à 100kW ou à 300 kW.

La machine électrique peut être une machine synchrone ou une machine asynchrone. La machine électrique a par exemple une tension nominale d'alimentation de 48V, ou une tension nominale d'alimentation supérieure à 200V, notamment à 300V, notamment à 800V, par exemple à 1000V.

Le rotor peut être à aimants permanents. Le rotor est par exemple dépourvu d'enroulement électrique d'excitation. Le rotor peut être formé par un paquet de tôles à l'intérieur duquel sont disposés les aimants permanents. En variante, le rotor peut comprendre un enroulement électrique d'excitation, étant notamment un rotor à griffes.

Dans tout ce qui précède, le rotor peut comprendre un nombre de paires de pôles quelconque, par exemple trois, quatre, six, ou huit paires de pôles.

L'enroulement électrique de stator peut être formé par des fils ou par des barres conductrices reliées les unes les autres. Chaque encoche de la carcasse de stator peut recevoir plusieurs conducteurs, par exemple 2, 4 ou 6.

Dans tout ce qui précède, la machine électrique tournante peut comprendre un circuit de refroidissement du stator dans lequel circule du fluide tel que de l'air ou du liquide. Ce liquide peut être de l'eau ou de l'huile. Le rotor peut être refroidi par ce même circuit de refroidissement ou par un autre circuit de refroidissement dans lequel circule de l'air, ou du liquide tel que de l'huile.

Le réseau de bord du véhicule comprend par exemple deux sous-réseaux entre lesquels est interposé un système de commutation définissant un convertisseur de tension continu/continu. L'un de l'onduleur/redresseur et du convertisseur de tension continu/continu peut mettre en oeuvre des interrupteurs électroniques commandables, tels que des transistors en nitrure de galium (GaN), en carbure de silicium (SiC), ou en silicium. Le premier sous-réseau électrique, étant celui apte à être connecté à l'onduleur/redresseur, présente par exemple une tension nominale de 48V ou une tension nominale de valeur supérieure à 200V, et le deuxième sous-réseau électrique présente par exemple une tension nominale de 12V.

Le réducteur comprend par exemple au moins une paire « roue menante / roue menée » pour permettre d'adapter la vitesse en sortie de la machine électrique à la vitesse des roues extérieures du véhicule qui viennent en contact avec le sol.

Chaque roue du réducteur a par exemple un nombre de dents supérieur ou égal à huit, ou à neuf, ou à dix. Certaines roues ont par exemple un nombre de dents compris entre vingt et trente tandis que d'autres roues ont un nombre de dents compris entre soixante-dix et quatre-vingt-dix. Toutes les roues du réducteur peuvent engrener directement deux à deux. En variante, certaines roues peuvent coopérer via un organe intermédiaire telle qu'une chaîne ou une courroie.

Le boîtier du réducteur peut porter les arbres sur lesquels sont montées les roues du réducteur. Ainsi, une dilatation du boîtier peut avoir des répercussions sur les positions respectives d'arbres portant des roues engrenant ensemble. Le boîtier du réducteur est par exemple réalisé en aluminium et les roues du réducteur sont réalisées en acier. Ainsi, des dilatations différentielles vont se produire entre le boîtier du réducteur et les roues, modifiant ainsi les positions relatives des roues.

Dans tout ce qui précède, le liquide contenu dans le réducteur peut être de l'huile, les roues du réducteur baignant alors dans l'huile.

Dans tout ce qui précède, le réducteur peut intégrer au moins un dispositif d'amortissement pendulaire tel que décrit dans la demande FR3108697 ou un dispositif d'amortissement à fréquence fixe tel que décrit dans la demande déposée en France le 20/07/21 sous le numéro de dépôt 21 07815.

Le boîtier du réducteur peut être rigidement couplé au carter de la machine électrique.

Le réducteur peut être soit directement couplé à la roue externe du véhicule, soit être monté sur un différentiel d'essieu avant ou sur un différentiel d'essieu arrière de véhicule. Le cas échéant, plusieurs systèmes de propulsion similaires peuvent être embarqués sur le véhicule.

L'invention a encore pour objet, selon un autre de ses aspects, l'utilisation d'un système de propulsion de véhicule électrique ou hybride, ce système de propulsion comprenant :
- une machine électrique tournante comprenant un enroulement électrique de stator,
- une électronique de commande de la machine électrique tournante, et
- un réducteur transmettant le couple en sortie de la machine électrique tournante vers une ou plusieurs roues externes en contact avec le sol, le réducteur comprenant un boîtier à l'intérieur duquel sont disposées des roues coopérant entre elles par engrènement pour transmettre le couple, ce boîtier recevant du liquide venant au contact des roues du réducteur,
procédé dans lequel:
- on compare une valeur seuil et la différence entre deux températures choisies parmi: la température du boîtier du réducteur, la température des roues du réducteur, et la température du liquide, et
- on adapte la commande du système de propulsion de manière à ce que cette différence de température reste inférieure à la valeur seuil.

Tout ce qui précède s'applique encore à cet autre aspect de l'invention.

L'invention pourra être mieux comprise à la lecture de la description qui va suivre d'exemples non limitatifs et à l'examen du dessin annexé sur lequel :
- la figure 1 représente de façon schématique un système de propulsion hybride dans lequel peut être implanté un dispositif de commande selon un exemple de mise en oeuvre de l'invention,
- la figure 2 représente la machine électrique, son électronique de commande et le réducteur du système de propulsion de la figure 1,
- la figure 3 est une réalisation de la représentation schématique de la figure 2,
- la figure 4 représente schématiquement l'intérieur du réducteur de la figure 3, et
- la figure 5 est une superposition de deux graphes montrant dans un exemple donné l'évolution temporelle de l'écart entre la température des roues du réducteur et la température de l'huile dans le réducteur et l'adaptation de la consigne de couple pour la machine électrique.

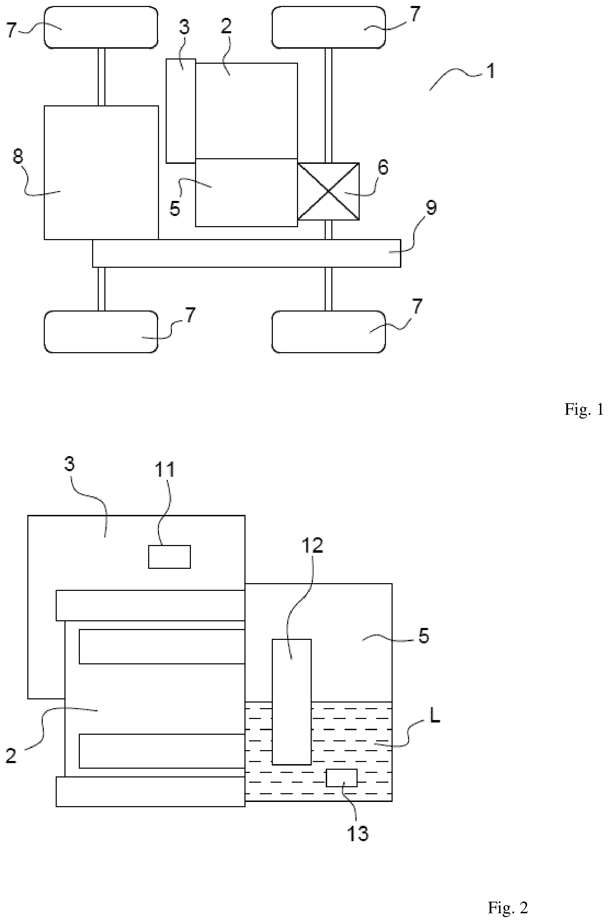

On a représenté sur la figure 1 un système de propulsion 1 auquel peut être intégrée l'invention. Ce système 1 peut appartenir à un véhicule électrique ou hybride. Dans l'exemple considéré, mais de façon non limitative, le système de propulsion est hybride, comprenant une machine électrique de propulsion 2 ayant un rotor et un stator, une électronique de commande 3 étant convertisseur de tension permettant d'alimenter électriquement le stator à partir de l'énergie électrique fournie par une unité de stockage d'énergie électrique, et un réducteur 5 recevant le couple fourni par le rotor en vue de propulser le véhicule. Le couple en sortie du réducteur 5 est reçu par un différentiel 6 qui est ici monté sur l'essieu arrière du véhicule pour entraîner des roues externes 7 du véhicule venant en contact avec le sol. Le système de propulsion 1 comprend encore un moteur thermique 8 monté sur l'essieu avant du véhicule, ce moteur étant associé à une ligne d'échappement 9.

La machine électrique de propulsion 2 est par exemple une machine synchrone à rotor à aimants permanents, fournissant une puissance nominale comprise entre 10 kW et 35 kW ou fournissant une puissance nominale supérieure à 100 kW. Le stator de cette machine synchrone peut comprendre un enroulement électrique formé par des conducteurs bobinés sur la carcasse du stator ou par des épingles reliées entre elles. L'enroulement électrique de stator est par exemple un enroulement triphasé ou un enroulement formé par deux enroulements triphasés.

Le convertisseur de tension 3 est par exemple un onduleur/redresseur permettant de convertir la tension continue de l'unité de stockage d'énergie électrique en une tension alternative pour alimenter électriquement le stator de la machine électrique de propulsion 2 dans un mode de propulsion du véhicule, et permettant de redresser la tension alternative induite aux bornes du stator de la machine électrique de propulsion 2 dans un mode régénératif. Le convertisseur de tension met par exemple en oeuvre plusieurs bras de commutation, chaque bras comprenant des interrupteurs commandables, par exemple des transistors à effet de champ ou des transistors IGBT.

Le convertisseur de tension reçoit ou applique selon le mode propulsion ou régénératif une tension à l'unité de stockage d'énergie électrique qui a par exemple une tension nominale comprise entre 42V et 54V, par exemple une tension nominale de 48V. En variante, la tension nominale de cette unité de stockage d'énergie électrique est supérieure à 200V, par exemple à 300V.

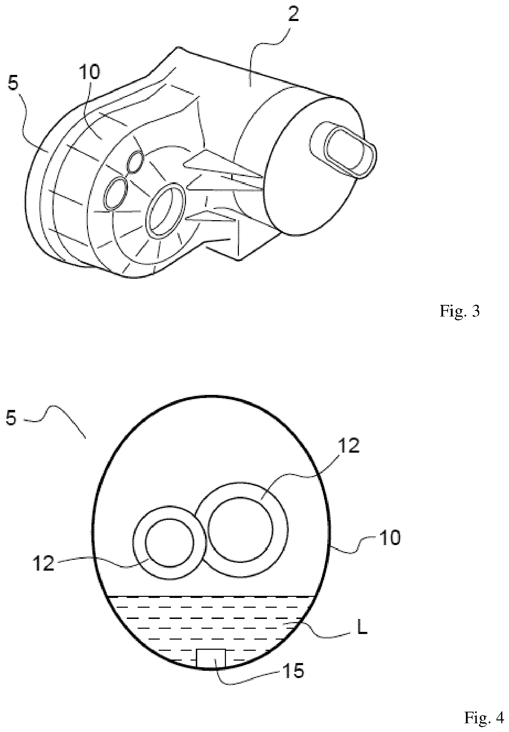

Comme on peut le voir sur les figures 2 et 3, la machine électrique 2, l'électronique de commande 3 et le réducteur 5 peuvent former un module commun, tel que par exemple décrit dans la demande WO2020/151996. Le boîtier 10 du réducteur 5 peut porter des ailettes de refroidissement et être rigidement couplé au carter de la machine électrique tournante 2. L'électronique de commande 3 peut recevoir un dispositif de commande 11 dont le rôle sera précisé plus tard. Ce dispositif de commande 11 est par exemple un microcontrôleur.

Comme on peut le voir sur la figure 4, le réducteur 5 contient du liquide L qui est ici de l'huile. Cette huile peut être confinée dans le réducteur 5, servant à refroidir et lubrifier des roues dentées 12 du réducteur 5. En variante, cette huile peut également circuler dans la machine électrique tournante 2 et/ou dans l'électronique de commande 3 pour refroidir ces derniers. Les roues dentées 12 du réducteur 5 baignent par exemple dans l'huile, comme représenté sur la figure 2.

Le réducteur 5, qui est représenté de façon très simplifiée sur les figures comprend plusieurs arbres portant chacun une ou plusieurs roues dentées 12. Ces roues 12 engrènent pour transmettre le couple fourni par la machine électrique 2 vers les roues externes 7 du véhicule. Les roues dentées 12 peuvent être choisies et agencées entre elles pour qu'un unique rapport soit possible, ou en variante pour que deux rapports distincts ou trois rapports distincts soient possibles.

Une roue disposée en amont d'une autre dans le chemin du couple de la machine électrique 2 vers les roues externes 7 présente par exemple un nombre de dents compris entre 20 et 30 tandis que la roue en aval dans ce chemin du couple avec laquelle elle engrène présente un nombre de dents compris entre 70 et 90.

Chaque arbre est par exemple porté par le boîtier 10 du réducteur via deux paliers. Le boîtier 10 du réducteur est par exemple en aluminium tandis que les roues dentées 12 et les arbres de ce réducteur sont en acier.

Des résistances chauffantes 13 peuvent ou non être prévues dans le réducteur 5, l'huile pouvant venir au contact ou être en permanence au contact de ces résistances chauffantes 13.

Le cas échéant, le réducteur peut encore comprendre plusieurs capteurs de température 15 qui peuvent être des thermocouples ou des sondes telles que des CTN pour mesurer la température de l'huile, et/ou la température du boîtier 10 et/ou la température des roues dentées 12.

En variante, aucun capteur de température 15 n'est prévu dans le réducteur 5, et les températures précitées peuvent être estimées via un estimateur, par exemple réalisé via le dispositif de commande 11. La température de l'huile dans le réducteur 5 peut alors être obtenue à l'aide d'un estimateur mettant en oeuvre des équations dynamiques ou une cartographie reliant cette température et : la puissance mécanique en entrée du réducteur 5 et/ou la température à l'extérieur du système de propulsion 1. La puissance mécanique en entrée du réducteur 5 est par exemple obtenue à l'aide de la puissance électrique de la machine électrique 2 déterminée à l'aide de la valeur du courant de phase et à l'aide du rendement de la machine électrique. Une fois l'estimation de la température de l'huile obtenue, on déduit la température des roues dentées 12 et/ou la température du boîtier 10.

Pour éviter d'avoir recours à des tolérances trop importantes dans le dimensionnement des roues dentées 12 engrenant entre elles, tolérances visant à éviter leur coincement, y compris dans des cas défavorables tel qu'un couple maximal transmis à froid par le réducteur 5, l'invention propose d'étudier une différence de température au sein du réducteur 5, et d' adapter la commande du système de propulsion 1 en fonction de la valeur de cette différence de température.

Le dispositif de commande 11 est par exemple configuré pour comparer la différence entre : la température des roues dentées 12 et la température de l'huile, à une valeur seuil prédéfinie qui peut rester constante lors de l'utilisation du véhicule ou varier en fonction des conditions d'utilisation. Un exemple de valeur seuil constante est par exemple 20°C. Pour s'assurer que cette différence de température précitée reste inférieure à la valeur seuil, ou dès que la valeur seuil est franchie pour ramener cette différence de température sous la valeur seuil, plusieurs exemples d'adaptation de la commande du système de propulsion 1 par le dispositif de commande 11 vont être décrits, qui peuvent être exclusives l'un de l'autre ou combinés ensemble, le cas échéant.

Ainsi, selon un premier exemple, le dispositif de commande 11 adapte la commande du système de propulsion 1 pour augmenter la température de l'huile dans le réducteur 5. Cette augmentation de température peut se faire en commandant l'activation des résistances chauffantes 13 précitées. La chaleur transmise à l'huile permet alors de diminuer la différence de température entre la température des roues dentées 12 et la température de l'huile, de sorte que cette température reste en-dessous de la valeur seuil,

Toujours selon ce premier exemple et dans une variante, le dispositif de commande 11 adapte la commande du système de propulsion de sorte que le convertisseur de tension 3 ne permet l'alimentation électrique que de certaines phases seulement de l'enroulement électrique de stator. Cette alimentation de certaines phases seulement ne fait pas tourner le rotor de la machine électrique 2 mais permet, par effet Joule dans l'enroulement électrique de stator, de chauffer l'huile et ainsi d'obtenir directement la diminution de la différence de température étudiée, ou lorsque l'huile du réducteur 5 ne circule pas dans la machine électrique, de lui transmettre indirectement la chaleur via le carter de la machine électrique 2 et le boîtier 10 du réducteur 5.

Toujours selon le premier exemple et selon une autre variante, le dispositif de commande 11 adapte la commande du système de propulsion 1 de sorte que le convertisseur de tension 3 applique une tension moyenne continue entre les phases de l'enroulement électrique de stator. L'application de cette tension moyenne continue permet, par effet Joule dans l'enroulement électrique de stator, d'obtenir les mêmes effets que ce qui vient d'être décrit en rapport avec la variante précédente sans faire tourner le rotor.

Ces différentes variantes du premier exemple peuvent être exclusives l'une de l'autre ou se combiner entre elles, le cas échéant.

Ce premier exemple d'adaptation de la commande pour faire augmenter la température du liquide et celle du boîtier 10 du réducteur 5 peut être conditionné au fait que la température à l'extérieur du système de propulsion 1, ou du véhicule, soit inférieure à une valeur donnée alors qu'un signal de réveil est reçu par le dispositif de commande 11. Un tel signal de réveil est par exemple l'une de la détection d'un déverrouillage du véhicule, de la détection de l'ouverture d'une porte du véhicule, de la détection de l'appui sur un bouton de démarrage du véhicule, ou de la réception d'un signal de commande depuis une télécommande.

Ce premier exemple d'adaptation de la commande pour faire augmenter la température du liquide et celle du boîtier 10 du réducteur 5 peut par ailleurs s'interrompre lorsque la température du liquide dans le réducteur 5 atteint une valeur donnée et/ou lorsqu'une durée donnée est dépassée.

Selon un deuxième exemple, le dispositif de commande 11 adapte la commande du système de propulsion 1 pour diminuer la température des roues dentées 12 du réducteur 5. Le dispositif de commande 11 peut par exemple mettre en oeuvre une stratégie d'allégement de régime (« derating » en anglais) pour réduire la consigne de couple pour la machine électrique 2, et en conséquence le couple transmis par les roues dentées 12. Le dispositif de commande 11 adapte alors la commande du système de propulsion de sorte que le convertisseur de tension 3 réduit la consigne de courant de phase et ainsi la consigne de couple. Cette réduction de la température des roues dentées 12 permet de réduire la différence de température entre ces roues dentées 12 et la température de l'huile.

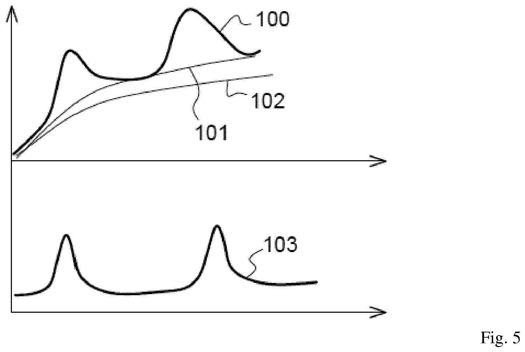

La Figure 5 représente superposées dans le temps :
- l'évolution de la température des roues dentées 12 selon une courbe 100,
- l'évolution de la température de l'huile selon une courbe 101,
- l'évolution de la température du boîtier 10 du réducteur 5 selon une courbe 102, et
- l'évolution de la consigne de couple pour la machine électrique 2 selon une courbe 103.

On constate que lorsque l'écart entre la courbe 100 et la courbe 101 dépasse la valeur seuil, la diminution de la consigne de couple selon la courbe 103 permet de faire diminuer la valeur de la température selon la courbe 100, et donc la valeur de l'écart de température entre la courbe 100 et la courbe 101.

L'invention n'est pas limitée aux exemples qui viennent d'être décrits.

Le cas échéant, l'adaptation de commande selon tout ou partie des variantes du premier exemple peut être combinée à l'adaptation de commande selon le deuxième exemple.

Dans tout ce qui précède, au lieu de comparer la valeur seuil à la différence entre la température des roues dentées 12 du réducteur et la température de l'huile, on peut comparer cette valeur seuil à la différence entre la température des roues dentées 12 et la température du boîtier 10 du réducteur 5.

Dans un exemple particulier, la température de l'huile peut être déterminée selon l'enseignement du brevet EP 3 589 857.

## Revendications

1. Système de propulsion (1) de véhicule électrique ou hybride, ce système de propulsion (1) comprenant :
- une machine électrique tournante (2) comprenant un enroulement électrique de stator,
- une électronique de commande (3) de la machine électrique tournante (2), et
- un réducteur (5) transmettant le couple en sortie de la machine électrique tournante (2) vers une ou plusieurs roues externes (7) en contact avec le sol, le réducteur (5) comprenant un boîtier (10) à l'intérieur duquel sont disposées des roues (12) coopérant entre elles par engrènement pour transmettre le couple, ce boîtier (10) recevant du liquide venant au contact des roues (12) du réducteur (5), et
- un dispositif de commande (11) du système de propulsion,
**caractérisé par le fait que** le dispositif de commande est configuré pour :
- comparer :
- la différence entre deux températures choisies parmi: la température du boîtier (10) du réducteur (5), la température des roues (12) du réducteur (5), et la température du liquide, et
- une valeur seuil, et
- adapter la commande du système de propulsion (1) de manière à ce que cette différence de température reste inférieure à la valeur seuil.

2. Système de propulsion selon la revendication 1, dans lequel le réducteur (5) comprend des résistances chauffantes (13), et dans lequel le dispositif de commande (11) est configuré pour commander l'activation de ces résistances chauffantes (13) de manière à chauffer le liquide pour réduire la différence de température.

3. Système de propulsion selon la revendication 1 ou 2, dans lequel l'enroulement électrique de stator est polyphasé, et dans lequel le dispositif de commande (11) est configuré pour commander l'alimentation de certaines phases seulement de cet enroulement électrique de manière à chauffer le liquide pour réduire la différence de température, ce liquide refroidissant également la machine électrique tournante (2), ou ce liquide ne refroidissant pas la machine électrique tournante (2) et l'échauffement dans la machine électrique étant transmis au boîtier (10) du réducteur (5) par convection et conduction.

4. Système de propulsion selon l'une quelconque des revendications précédentes, dans lequel l'enroulement électrique de stator est polyphasé et dans lequel le dispositif de commande (11) est configuré pour appliquer une tension moyenne continue entre les phases de l'enroulement électrique de stator, de manière à chauffer le liquide pour réduire la différence de température, ce liquide refroidissant également la machine électrique tournante (2), ou ce liquide ne refroidissant pas la machine électrique tournante (2) et l'échauffement dans la machine électrique étant transmis au boîtier (10) du réducteur (5) par convection et conduction.

5. Système de propulsion selon la revendication 1, dans lequel le dispositif de commande (11) est configuré pour modifier l'alimentation de l'enroulement électrique de stator de manière à réduire la consigne de couple de la machine électrique (2) pour réduire la différence de température.

6. Système de propulsion selon l'une quelconque des revendications précédentes, dans lequel l'une au moins de la température du boîtier (10), de la température du liquide, et de la température des roues (12) du réducteur (5) est obtenue à l'aide d'un estimateur.

7. Système de propulsion selon l'une quelconque des revendications précédentes, dans lequel l'une au moins de la température du boîtier (10), de la température du liquide, et de la température des roues (12) du réducteur (5) est obtenue à l'aide d'un capteur (15).

8. Système de propulsion selon l'une quelconque des revendications précédentes, dans lequel on compare à la valeur seuil la différence entre la température des roues (12) du réducteur (5) et la température du boîtier (10) du réducteur (5), ou on compare à la valeur seuil la différence entre la température des roues (12) du réducteur (5) et la température du liquide.

9. Système de propulsion selon l'une quelconque des revendications précédentes, dans lequel le boîtier (10) du réducteur porte les arbres sur lesquels sont montées les roues (12) du réducteur.

10. Système de propulsion selon l'une quelconque des revendications précédentes, dans lequel le boîtier (10) du réducteur est réalisé en aluminium et dans lequel les roues (12) du réducteur sont réalisées en acier.

11. Système de propulsion selon l'une quelconque des revendications précédentes, dans lequel le liquide est l'huile.

12. Utilisation d'un système de propulsion (1) selon l'une quelconque des revendications précédentes, utilisation dans laquelle:
- on compare :
- la différence entre deux températures choisies parmi: la température du boîtier du réducteur, la température des roues du réducteur, et la température du liquide, et
- une valeur seuil, et
- on adapte la commande du système de propulsion (1) de manière à ce que cette différence de température reste inférieure à la valeur seuil.

## Patentansprüche

1. Antriebssystem (1) eines Elektro- oder Hybridfahrzeugs, wobei dieses Antriebssystem (1) umfasst:
- eine rotierende elektrische Maschine (2), die eine elektrische Statorwicklung umfasst,
- eine Steuerelektronik (3) der rotierenden elektrischen Maschine (2) und
- ein Untersetzungsgetriebe (5), welches das Drehmoment am Abtrieb der rotierenden elektrischen Maschine (2) auf ein oder mehrere äußere Räder (7) überträgt, die sich in Kontakt mit dem Boden befinden, wobei das Untersetzungsgetriebe (5) ein Gehäuse (10) umfasst, in dessen Innerem Räder (12) angeordnet sind, die durch Zahneingriff zusammenwirken, um das Drehmoment zu übertragen, wobei dieses Gehäuse (10) Flüssigkeit aufnimmt, die mit den Rädern (12) des Untersetzungsgetriebes (5) in Kontakt kommt, und
- eine Steuerungsvorrichtung (11) des Antriebssystems,
**dadurch gekennzeichnet, dass** die Steuerungsvorrichtung dafür ausgelegt ist:
- zu vergleichen:
- die Differenz zwischen zwei Temperaturen, die ausgewählt sind aus: der Temperatur des Gehäuses (10) des Untersetzungsgetriebes (5), der Temperatur der Räder (12) des Untersetzungsgetriebes (5) und der Temperatur der Flüssigkeit, und
- einen Schwellenwert, und
- die Steuerung des Antriebssystems (1) so anzupassen, dass diese Temperaturdifferenz kleiner als der Schwellenwert bleibt.

2. Antriebssystem nach Anspruch 1, wobei das Untersetzungsgetriebe (5) Heizwiderstände (13) umfasst und wobei die Steuerungsvorrichtung (11) dafür ausgelegt ist, die Aktivierung dieser Heizwiderstände (13) so zu steuern, dass die Flüssigkeit erwärmt wird, um die Temperaturdifferenz zu verringern.

3. Antriebssystem nach Anspruch 1 oder 2, wobei die elektrische Statorwicklung mehrphasig ist und wobei die Steuerungsvorrichtung (11) dafür ausgelegt ist, die Speisung nur gewisser Phasen dieser elektrischen Wicklung so zu steuern, dass die Flüssigkeit erwärmt wird, um die Temperaturdifferenz zu verringern, wobei diese Flüssigkeit auch die rotierende elektrische Maschine (2) kühlt oder diese Flüssigkeit die rotierende elektrische Maschine (2) nicht kühlt und die Erwärmung in der elektrischen Maschine auf das Gehäuse (10) des Untersetzungsgetriebes (5) durch Konvektion und Leitung übertragen wird.

4. Antriebssystem nach einem der vorhergehenden Ansprüche, wobei die elektrische Statorwicklung mehrphasig ist und wobei die Steuerungsvorrichtung (11) dafür ausgelegt ist, eine mittlere Gleichspannung zwischen den Phasen der elektrischen Statorwicklung anzulegen, um so die Flüssigkeit zu erwärmen, um die Temperaturdifferenz zu verringern, wobei diese Flüssigkeit auch die rotierende elektrische Maschine (2) kühlt oder diese Flüssigkeit die rotierende elektrische Maschine (2) nicht kühlt und die Erwärmung in der elektrischen Maschine auf das Gehäuse (10) des Untersetzungsgetriebes (5) durch Konvektion und Leitung übertragen wird.

5. Antriebssystem nach Anspruch 1, wobei die Steuerungsvorrichtung (11) dafür ausgelegt ist, die Speisung der elektrischen Statorwicklung so zu ändern, dass der Drehmomentsollwert der elektrischen Maschine (2) verringert wird, um die Temperaturdifferenz zu verringern.

6. Antriebssystem nach einem der vorhergehenden Ansprüche, wobei die Temperatur des Gehäuses (10), die Temperatur der Flüssigkeit und/oder die Temperatur der Räder (12) des Untersetzungsgetriebes (5) mithilfe einer Schätzfunktion erhalten wird.

7. Antriebssystem nach einem der vorhergehenden Ansprüche, wobei die Temperatur des Gehäuses (10), die Temperatur der Flüssigkeit und/oder die Temperatur der Räder (12) des Untersetzungsgetriebes (5) mithilfe eines Sensors (15) erhalten wird.

8. Antriebssystem nach einem der vorhergehenden Ansprüche, wobei die Differenz zwischen der Temperatur der Räder (12) des Untersetzungsgetriebes (5) und der Temperatur des Gehäuses (10) des Untersetzungsgetriebes (5) mit dem Schwellenwert verglichen wird oder die Differenz zwischen der Temperatur der Räder (12) des Untersetzungsgetriebes (5) und der Temperatur der Flüssigkeit mit dem Schwellenwert verglichen wird.

9. Antriebssystem nach einem der vorhergehenden Ansprüche, wobei das Gehäuse (10) des Untersetzungsgetriebes Wellen trägt, auf denen die Räder (12) des Untersetzungsgetriebes angebracht sind.

10. Antriebssystem nach einem der vorhergehenden Ansprüche, wobei das Gehäuse (10) des Untersetzungsgetriebes aus Aluminium hergestellt ist und wobei die Räder (12) des Untersetzungsgetriebes aus Stahl hergestellt sind.

11. Antriebssystem nach einem der vorhergehenden Ansprüche, wobei die Flüssigkeit Öl ist.

12. Verwendung eines Antriebssystems (1) nach einem der vorhergehenden Ansprüche, wobei bei dieser Verwendung:
- verglichen werden:
- die Differenz zwischen zwei Temperaturen, die ausgewählt sind aus: der Temperatur des Gehäuses des Untersetzungsgetriebes, der Temperatur der Räder des Untersetzungsgetriebes und der Temperatur der Flüssigkeit, und
- einen Schwellenwert, und
- die Steuerung des Antriebssystems (1) so angepasst wird, dass diese Temperaturdifferenz kleiner als der Schwellenwert bleibt.

## Claims

1. Propulsion system (1) for an electric or hybrid vehicle, this propulsion system (1) comprising:
- a rotary electric machine (2) comprising an electric stator winding,
- control electronics (3) for controlling the rotary electric machine (2), and
- a reduction gear (5) transmitting the torque output from the rotary electric machine (2) to one or more external wheels (7) in contact with the ground, the reduction gear (5) comprising a housing (10) inside which are arranged wheels (12) interacting with each other by meshing in order to transmit the torque, this housing (10) receiving liquid that comes into contact with the wheels (12) of the reduction gear (5), and
- a control device (11) for controlling the propulsion system,
**characterized in that** the control device is configured to:
- compare:
- the difference between two temperatures selected from: the temperature of the housing (10) of the reduction gear (5), the temperature of the wheels (12) of the reduction gear (5), and the temperature of the liquid, and
- a threshold value, and
- adjust the control of the propulsion system (1) so that this temperature difference remains below the threshold value.

2. Propulsion system according to Claim 1, wherein the reduction gear (5) comprises heating resistors (13), and wherein the control device (11) is configured to control the activation of these heating resistors (13) so as to heat the liquid in order to reduce the temperature difference.

3. Propulsion system according to Claim 1 or 2, wherein the electric stator winding is polyphase, and wherein the control device (11) is configured to control the supply of power to just certain phases of this electric winding so as to heat the liquid in order to reduce the temperature difference, this liquid also cooling the rotary electric machine (2), or this liquid not cooling the rotary electric machine (2) and heat generated in the electric machine being transmitted to the housing (10) of the reduction gear (5) by convection and conduction.

4. Propulsion system according to any one of the preceding claims, wherein the electric stator winding is polyphase, and wherein the control device (11) is configured to apply a continuous mean voltage between the phases of the electric stator winding so as to heat the liquid in order to reduce the temperature difference, this liquid also cooling the rotary electric machine (2), or this liquid not cooling the rotary electric machine (2) and heat generated in the electric machine being transmitted to the housing (10) of the reduction gear (5) by convection and conduction.

5. Propulsion system according to Claim 1, wherein the control device (11) is configured to modify the supply of power to the electric stator winding so as to reduce the torque setpoint of the electric machine (2) in order to reduce the temperature difference.

6. Propulsion system according to any one of the preceding claims, wherein at least one of the temperature of the housing (10), the temperature of the liquid and the temperature of the wheels (12) of the reduction gear (5) is obtained using an estimator.

7. Propulsion system according to any one of the preceding claims, wherein at least one of the temperature of the housing (10), the temperature of the liquid and the temperature of the wheels (12) of the reduction gear (5) is obtained using a sensor (15).

8. Propulsion system according to any one of the preceding claims, wherein the difference between the temperature of the wheels (12) of the reduction gear (5) and the temperature of the housing (10) of the reduction gear (5) is compared with the threshold value, or the difference between the temperature of the wheels (12) of the reduction gear (5) and the temperature of the liquid is compared with the threshold value.

9. Propulsion system according to any one of the preceding claims, wherein the housing (10) of the reduction gear holds the shafts on which the wheels (12) of the reduction gear are mounted.

10. Propulsion system according to any one of the preceding claims, wherein the housing (10) of the reduction gear is made from aluminium and wherein the wheels (12) of the reduction gear are made from steel.

11. Propulsion system according to any one of the preceding claims, wherein the liquid is oil.

12. Use of a propulsion system (1) according to any one of the preceding claims, in which use:
- the following are compared:
- the difference between two temperatures selected from: the temperature of the housing of the reduction gear, the temperature of the wheels of the reduction gear, and the temperature of the liquid, and
- a threshold value, and
- the control of the propulsion system (1) is adjusted so that this temperature difference remains below the threshold value.
